# FASCICULE DE BREVET EUROPEEN

(11) **EP 2 593 781 B1**
(45) Date de publication et mention de la délivrance du brevet: **09.04.2014**
(21) Numéro de dépôt: 11749465.8
(22) Date de dépôt: 12.07.2011
(51) Int. Cl.: G01N 27/30

(54) **ELECTRODE DE REFERENCE MINIATURE**
MINIATUR-REFERENZELEKTRODE
MINIATURE REFERENCE ELECTRODE

(30) Priorité: 16.07.2010 FR 1003007
(43) Date de publication de la demande: 22.05.2013
(73) Titulaire: Commissariat à l'Énergie Atomique et aux Énergies Alternatives, 75015 Paris (FR)
(72) Inventeur: KIRCHEV, Angel Zhivkov, F-73100 Aix-les-Bains (BG); DIEM, Bernard, F-38130 Echirolles (FR); MATTERA, Florence, F-38700 Sarcenas (FR)
(74) Mandataire: Talbot, Alexandre
(86) Numéro de dépôt international: PCT/FR2011/000416
(87) Numéro de publication internationale: WO 2012/007660

(56) Documents cités:
- US-A- 5 250 163
- US-A1- 2007 138 027
- US-B1- 6 419 809
- ANITHA G ET AL: "Recognition and exposition of intermolecular interaction between CH2Cl2 and CHCl3 by conducting polyaniline materials", SENSORS AND ACTUATORS B, ELSEVIER SEQUOIA S.A., LAUSANNE, CH, vol. 107, no. 2, 29 juin 2005 (2005-06-29) , pages 605-615, XP025328671, ISSN: 0925-4005, DOI: DOI:10.1016/J.SNB.2004.11.027 [extrait le 2005-06-29]
- BHADRA S ET AL: "Progress in preparation, processing and applications of polyaniline", PROGRESS IN POLYMER SCIENCE, PERGAMON PRESS, OXFORD, GB, vol. 34, no. 8, 1 August 2009 (2009-08-01) , pages 783-810, XP026234570, ISSN: 0079-6700, DOI: 10.1016/J.PROGPOLYMSCI.2009.04.003 [retrieved on 2009-05-03]

## Description

### Domaine technique de l'invention

L'invention est relative à une électrode de référence miniature pour la mesure de potentiels dans des systèmes électrochimiques.

### État de la technique

L'utilisation principale d'une électrode de référence est la mesure des potentiels d'électrodes dans des systèmes électrochimiques. Typiquement, le potentiel d'une électrode de travail dans une cellule électrochimique est défini par rapport à l'électrode de référence, en mesurant la tension entre l'électrode de travail et l'électrode de référence.

L'électrode de référence comprend principalement un couple de matériaux d'oxydoréduction ayant un potentiel constant et un électrolyte interne. Le couple argent/chlorure d'argent (Ag/AgCl) est largement utilisé en raison de sa grande stabilité et de sa réversibilité de réaction. Dans ce type d'électrode, l'électrolyte est une solution saturée de chlorure de potassium (KCI) ou de chlorure de sodium (NaCl). Le potentiel de l'électrode variant en fonction de la concentration en ions chlorures contenus dans l'électrolyte, celle-ci doit être la plus stable possible.

Une membrane poreuse, appelée jonction liquide, est classiquement employée pour séparer l'électrolyte interne de l'électrolyte de la cellule. Cette membrane permet l'échange de protons (H⁺) entre les deux électrolytes. Elle ralentit la diffusion des ions (K⁺, Na⁺, Cl⁻...) entre la cellule et l'électrode de référence, pour maintenir un potentiel de référence constant.

Récemment, les dimensions des systèmes électrochimiques tels que les capteurs chimiques et les batteries ont considérablement diminué. Un effort est réalisé pour miniaturiser les électrodes de référence et ainsi faciliter leur intégration dans ces systèmes. Or, la miniaturisation implique également une réduction significative du volume d'électrolyte interne. Le phénomène de modification de la concentration et/ou de la composition de l'électrolyte est alors accentué.

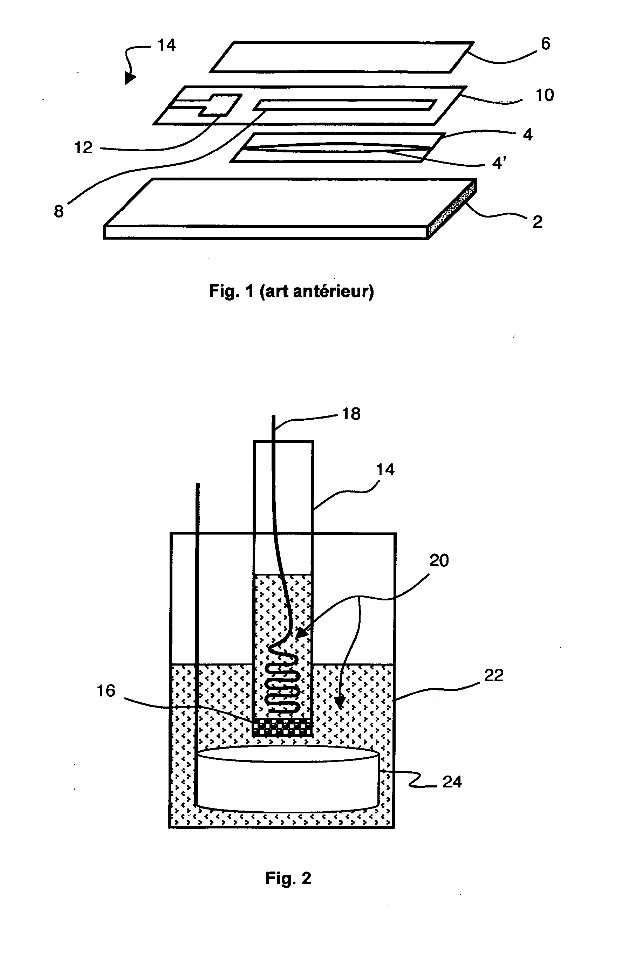

La figure 1 représente une vue en éclaté d'une électrode de référence miniature telle que décrite dans le brevet US6419809.

Cette électrode est constituée de couches minces déposées successivement sur un substrat 2 en verre. L'électrode comprend une couche 4 d'argent dont une portion 4' est transformée en chlorure d'argent AgCl. La portion 4' est en contact avec une couche d'électrolyte 6 à travers une fente 8 formée dans une couche 10 en polyimide. La couche 6 est imprégnée d'une solution saturée de chlorure de potassium (KCI). La couche 10 comprend un évidement à l'une de ses extrémités pour loger une membrane 12 en matériau polymère hydrophile et poreux. Une portion de la membrane 12 est recouverte de la couche d'électrolyte 6. La membrane poreuse 12 est imprégnée de l'électrolyte KCI.

Lors du fonctionnement de cette électrode, une extrémité de la membrane 12 est plongée dans une solution aqueuse 14 constituant l'électrolyte de la cellule. Un transfert de protons entre l'électrolyte interne 6 et l'électrolyte 14 de la cellule est alors possible par l'intermédiaire de la membrane 12.

L'utilisation d'une membrane en polymère poreux, comme dans le brevet US6419809, ne satisfait pas aux conditions d'imperméabilité aux ions. En effet, compte tenu de sa faible épaisseur, l'eau et les ions traversent la membrane. La composition de l'électrolyte interne change progressivement, ce qui conduit à la défaillance de l'électrode de référence. La durée de vie de ce type d'électrode est comprise entre une semaine et trois mois.

Il est envisagé, dans l'article « A solid-state pH sensor based on a Nafion-coated iridium oxide indicator electrode and a polymer-based silver chloride reference electrode » (P.J. Kinlen et al., Sens. Actuators, B 22, pp.13-25, 1994), d'utiliser une membrane protectrice en Nafion (marque déposée par la société DuPont) en tant que membrane séparatrice. Cette membrane échangeuse de protons améliore l'imperméabilité aux ions de la jonction, permettant ainsi de maintenir un potentiel de référence constant.

Les membranes en Nafion sont utilisées de façon similaire dans les piles à combustibles PEMFC (« Proton Exchange Membrane Fuel Cell ») entre deux couches catalytiques, sièges des réactions d'oxydation et de réduction. La membrane sépare les deux compartiments de la pile et ne laisse traverser que les protons.

Dans l'électrode de référence miniature de l'article susmentionné, la membrane en Nafion n'est efficace que pendant une courte période, compte tenu de sa faible épaisseur. L'utilisation d'une plus grande épaisseur de Nafion est contrainte par l'effort de miniaturisation et un coût important du matériau. Il existe aussi, tel que décrit dans le brevet US20070138027, des électrodes de référence dont la membrane est fabriquée à partir d'un matériau polymère.

L'électrode de référence miniature peut être incorporée dans des batteries pour le contrôle de l'état de santé ou le contrôle des cycles de charge et décharge. Les batteries ayant une durée de vie pouvant atteindre plusieurs années, on cherche à obtenir une électrode de référence qui reste fiable sur une période aussi longue.

### Résumé de l'invention

On constate qu'il existe un besoin de prévoir à moindre coût une électrode de référence miniature ayant une durée de vie élevée.

On tend à satisfaire ce besoin en prévoyant une électrode de référence comprenant un électrolyte de référence et une membrane échangeuse de protons agencée pour séparer l'électrolyte de référence d'un milieu externe à l'électrode, la membrane échangeuse de protons comprenant des particules de polyaniline dopée à l'acide distribuées dans un matériau polymère liant.

On prévoit également un procédé de réalisation d'une électrode de référence miniature.

Le procédé comprend les étapes de réalisation d'un mélange d'une poudre à base de polyaniline dopée à l'acide et d'un matériau liquide polymérisable, le dépôt d'une couche du mélange sur une couche d'électrolyte de référence et la polymérisation du mélange.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels:
- la figure 1, précédemment décrite, représente une vue en éclaté d'une électrode de référence miniature selon l'art antérieur,
- la figure 2 représente schématiquement une cellule de test d'une membrane à échange de protons utilisée dans une électrode de référence miniature selon l'invention,
- la figure 3 représente les modules d'impédance d'une électrode selon l'invention et de plusieurs électrodes classiques en fonction de la fréquence,
- la figure 4 représente une vue en coupe d'un mode de réalisation d'électrode selon l'invention,
- les figures 5 et 6 représentent, respectivement en vue de coupe et en vue de dessus schématique, une demi-électrode selon une variante de réalisation, et
- la figure 7 représente schématiquement un assemblage de deux demi-électrodes selon les figures 5 et 6.

### Description d'un mode de réalisation préféré de l'invention

Les inventeurs ont constaté que la fiabilité d'une électrode de référence peut être considérablement améliorée à l'aide d'une membrane séparatrice à base de polyaniline (PANI), sous une forme dopée à l'acide. Par polyaniline dopée à l'acide, on entend un sel résultant de la réaction de la polyaniline avec un acide. Cette forme de polyaniline dispose d'une bonne conductivité protonique. Par ailleurs, elle est parfaitement adaptée aux conditions d'utilisation dans une électrode de référence. D'une part, elle est insoluble dans l'eau, les solutions alcalines ou acides et la plupart des solvants organiques. D'autre part, elle résiste aux réactions d'oxydation et de réduction, notamment avec l'oxygène de l'atmosphère. Par la suite, on utilisera les termes « PANI » ou « polyaniline » pour désigner la polyaniline dopée à l'acide.

La polyaniline est un polymère électriquement conducteur qui peut être utilisé en tant qu'électrode. En revanche, son utilisation en tant que membrane échangeuse de protons dans les piles PEMFC n'est pas possible puisqu'un court-circuit serait provoqué entre les électrodes de la pile. Il n'a donc pas été envisagé, jusqu'à présent, d'utiliser de la polyaniline dans une électrode de référence en tant que membrane.

De préférence, la polyaniline est sous forme de particules et la membrane comprend une matrice polymère dans laquelle sont dispersées les particules. Le rapport de la masse de polyaniline sur la masse de polymère est avantageusement compris entre 1 et 2. La membrane ainsi obtenue est alors compacte et non-poreuse, contrairement aux membranes classiques.

La porosité à l'eau et aux ions sulfate, qui correspond à la perméabilité de la membrane, peut être évaluée de la manière suivante : un tube contenant une solution d'acide sulfurique de 5 mol/L (5 M H₂SO₄) et fermé par une membrane à base de PANI est plongé dans un bécher contenant de l'eau dé-ionisée. Le pH de l'eau est mesuré quelques minutes après avoir plongé la membrane dans l'eau, puis au bout d'une semaine. Le pH reste constant, ce qui indique que la membrane à base de PANI est imperméable aux ions sulfate (SO₄²⁻, HSO₄⁻).

La conductivité protonique est la grandeur caractérisant l'aptitude de la membrane à permettre le passage de protons. Elle est directement liée à la résistance électrique de la membrane. Par ailleurs, la membrane est généralement l'élément le plus résistif de l'électrode de référence et une résistance élevée de l'électrode conduit à une erreur sur les mesures de potentiel. On cherche donc à minimiser cette résistance.

Dans les membranes poreuses imprégnées d'électrolyte de l'art antérieur, la résistance est liée au taux de porosité. Il existe alors un compromis entre la résistance et l'imperméabilité aux ions. En effet, plus la membrane est poreuse, plus sa résistance est faible et plus les ions sont aptes à la traverser.

La membrane à base de PANI étant non-poreuse, on se propose d'évaluer son impédance pour vérifier sa capacité à faire partie d'une électrode de référence.

La figure 2 représente une cellule électrochimique expérimentale permettant de déterminer l'impédance d'une membrane à base de PANI. La cellule comporte un tube 14 d'environ 8 mm de diamètre. Une extrémité du tube 14 est bouchée de façon étanche par une membrane 16 formée de résine époxy et de PANI (rapport 1:1), d'environ 1 mm d'épaisseur. Un fil de plomb 18 en forme de spirales est disposé à l'intérieur du tube et en partie immergé dans un électrolyte 20 de 5 M H₂SO₄. Le tube 14 est ensuite plongé dans le même électrolyte 20, de manière que la membrane 16 soit complètement immergée.

Le fil de plomb 18 constitue alors une électrode de travail. La cellule est complétée par une contre-électrode 24 en platine plongée dans l'électrolyte 20. Dans cette configuration, la membrane 16 est l'élément le plus résistif de la cellule.

L'impédance de la membrane 16 peut être déterminée en mesurant l'impédance de la cellule électrochimique de la figure 2. En effet, celles-ci sont sensiblement identiques étant donné que la membrane est de part et d'autre en contact avec l'électrolyte 20 et à proximité immédiate des parties conductrices. La chute ohmique due à l'électrolyte H₂SO₄ est donc négligeable. La méthode employée est la spectroscopie d'impédance sur une gamme de fréquences allant de 0,1 Hz à 65 kHz à l'aide d'un signal sinusoïdal d'une amplitude comprise entre 5 et 10 mV.

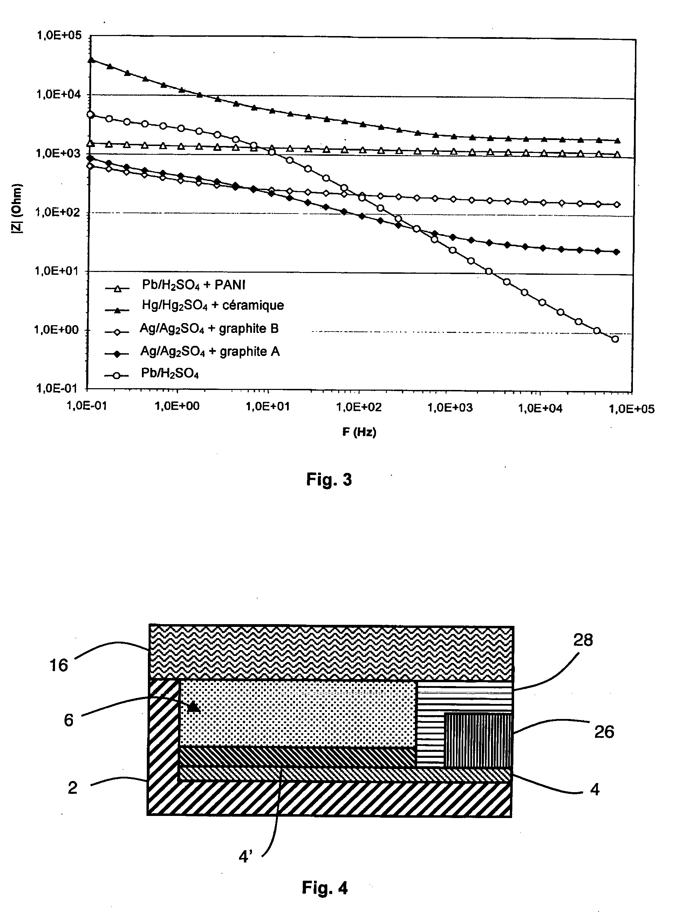

La figure 3 représente l'impédance (exprimée par son module) de la cellule de la figure 2 (Pb/H₂SO₄ + PANI). Des électrodes classiques utilisant des membranes poreuses ont été mesurées à titre de comparaison, notamment des électrodes Ag/Ag₂SO₄ et Hg/Hg₂SO₄ avec des membranes en graphite ou en céramique. Deux types de graphite sont employés : un graphite de porosité élevée (A) et un graphite de porosité faible (B).

La résistance ohmique de la membrane PANI, visible dans le haut du spectre de fréquences (>10 kHz), atteint des valeurs comprises entre celles des électrodes classiques Hg/Hg₂SO₄ et Ag/Ag₂SO₄. La membrane à base de PANI atteint donc des performances similaires en termes de résistance. Son utilisation pour former une électrode de référence précise est donc possible.

On peut également voir sur la figure 3 l'impédance d'une cellule dépourvue de membrane. La résistance ohmique de cette cellule est inférieure à celle de la cellule représentée à la figure 2, de deux à trois ordres de grandeur. Cela montre bien que la membrane contribue à la quasi-totalité de l'impédance de la cellule. En fait, l'impédance mesurée dans ce cas correspond à la résistance de l'électrolyte H₂SO₄, aux résistances parasites et aux résistances de contact.

La réalisation d'une membrane à base de PANI peut poser certaines difficultés. La polyaniline dopée à l'acide est généralement obtenue par synthèse électrochimique. Elle se présente alors sous la forme d'un dépôt électrolytique sur des électrodes. Le matériau obtenu est dur et friable, ce qui rend difficile son exploitation sous la forme d'une membrane.

Dans le cadre de la réalisation de l'électrode de référence, on synthétise également la polyaniline par voie électrochimique. On peut, par exemple, obtenir une couche d'environ 1,5 mm de PANI sur des électrodes en graphite plongées dans un bain comprenant une solution de sulfate d'aniline (0,15 mol/L) et un électrolyte d'acide sulfurique (0,25 mol/L), en appliquant un courant de l'ordre de 1 mA.cm⁻² pendant une durée de 300h.

Le dépôt ainsi formé est broyé sous la forme d'une poudre. La taille des particules de la poudre est variable. La poudre de PANI est ensuite mélangée à un matériau polymérisable sous forme liquide pour former une pâte. Puis, la pâte est déposée sous forme d'une couche. Enfin, on réalise la polymérisation de la pâte, de préférence par traitement thermique à une température comprise entre 60°C et 80°C ou par irradiation aux ultraviolets. Une structure dense et non-poreuse due au procédé de polymérisation est alors obtenue.

Le matériau polymérisable est, de préférence, un pré-polymère activé par un acide ou par un radical. Il est également préférable que le matériau soit stable dans les électrolytes acides et qu'il préserve la conductivité protonique du PANI. Les pré-polymères à base de phénol-furfural, de phénol-formaldéhyde, de méthacrylate de méthyle ou de résine époxy durcie à l'acide satisfont ces critères. De plus, avec ces pré-polymères, la pâte est parfaitement adaptée aux technologies peu coûteuses d'impression, notamment l'impression par écran.

Pour optimiser les performances de l'électrode de référence, la synthèse électrochimique de la polyaniline peut être adaptée au type d'électrode souhaitée. On choisit, de préférence, un précurseur (la source d'aniline) et un électrolyte en fonction du couple d'oxydoréduction et de la nature de l'électrolyte interne. Par exemple, si l'électrode est de type Ag/Ag₂SO₄/H₂SO₄, le précurseur peut être le sulfate d'aniline et l'électrolyte peut être H₂SO₄.

En d'autres termes, le précurseur contient un ion identique à l'un des ions de l'électrolyte interne et l'électrolyte de la synthèse est de même nature que l'électrolyte interne. Ainsi, la polyaniline est dopée avec le même ion que l'un des ions de l'électrolyte interne. Dans notre exemple, il s'agit de l'ion sulfate, également présent dans le sel du couple d'oxydoréduction. On minimise ainsi les échanges entre anions à l'interface entre le PANI et l'électrolyte, ces échanges créant habituellement un potentiel d'interface néfaste.

La figure 4 représente un mode de réalisation d'une électrode de référence miniature munie d'une membrane à base de PANI. L'électrode est formée sur un substrat 2 en verre ou en silicium recouvert d'une couche de passivation, d'une épaisseur de 1 mm environ. Les couches constituant l'électrode sont, de préférence, déposées par impression par écran.

Une cavité d'une profondeur d'environ 300 µm est tout d'abord gravée dans le substrat 2. Une couche d'argent 4, de 30 µm d'épaisseur environ, est ensuite déposée au fond de la cavité. Une couche 4' de sulfate d'argent, de 60 µm d'épaisseur environ, est déposée sur une portion de la couche 4. Un plot de contact électrique 26, par exemple en cuivre, est également formé sur la couche d'argent 4, à une extrémité de l'électrode. Une couche 6, par exemple en microfibres de verre, est ensuite déposée sur l'ensemble de la couche 4'. Son épaisseur est de l'ordre de 210 µm. Une couche électriquement isolante 28, de préférence en polymère, recouvre le plot 26 et une portion de la couche 4 située entre le plot et la couche 4'. Une face latérale du plot 26 correspondant au bord de l'électrode est exposée au milieu ambiant. Après le durcissement de la couche 28, une solution électrolytique (H₂SO₄) est insérée dans la couche 6 pour former la couche d'électrolyte. Cette insertion peut être réalisée par impression jet d'encre ou à l'aide d'une micro-seringue.

Le substrat 2, la couche d'électrolyte 6 et la couche isolante 28 forment une surface, de préférence plane, sur laquelle est déposée une couche de pâte à base de PANI, de manière à sceller complètement l'électrolyte 6. La pâte est ensuite polymérisée pour former la membrane 16. L'épaisseur de la membrane 16 est, de préférence, comprise entre 0,5 et 1 mm. Les courts-circuits entre le plot 26 et la couche 6 et entre le plot 26 et la membrane 16 sont évités par la couche isolante 28.

Dans l'exemple de la figure 4, la membrane 16 comprend, en masse, deux fois plus de PANI que de polymère.

Pour finaliser la construction de l'électrode de référence, un collecteur de courant métallique est fixé au plot de contact 26, par exemple par soudure. L'électrode de référence est, de plus, recouverte par une enveloppe protectrice, en matière plastique par exemple. L'enveloppe recouvre, de préférence, l'ensemble de l'électrode excepté une portion de la membrane 16, disposée à l'aplomb de la couche 4'.

Cette électrode de référence présente une grande surface de contact entre l'électrolyte de la cellule et la membrane 16, ce qui diminue la résistance électrique de cette dernière.

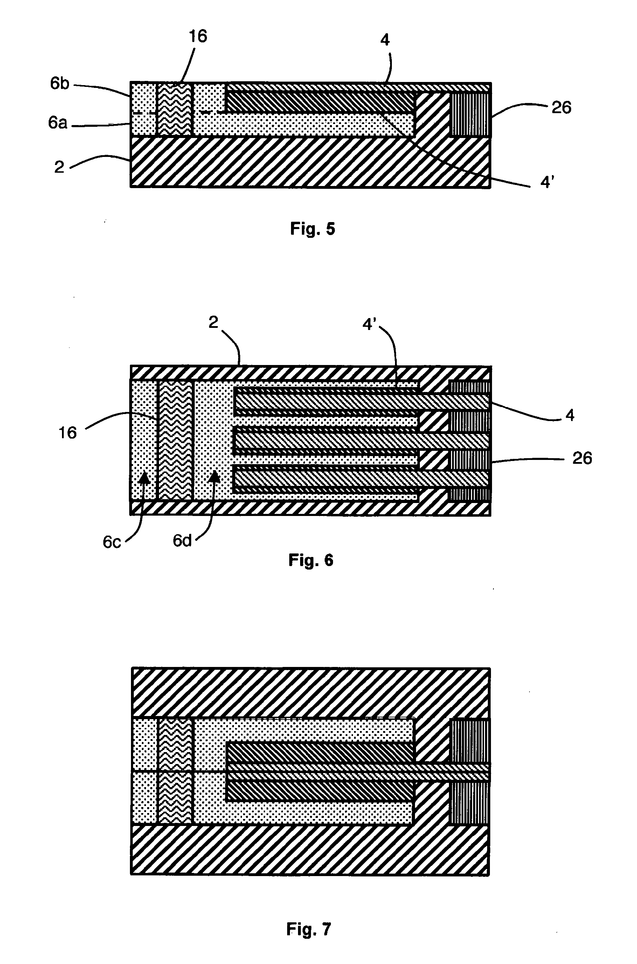

Les figures 5 à 7 illustrent une variante de réalisation d'une électrode de référence, composée de deux moitiés identiques qui sont ensuite collées. Les figures 5 et 6 représentent, respectivement en vue de coupe et en vue de dessus schématique, une demi-électrode tandis que la figure 7 représente l'électrode de référence assemblée.

Chaque demi-électrode comprend un substrat 2 dans lequel sont formées deux cavités distinctes d'une profondeur de 300 µm environ, chaque cavité débouchant sur une extrémité de l'électrode. Une cavité (à droite sur les figures 5 et 6) est remplie par le plot de contact 26. Une première couche 6a de microfibres de verre, la couche 4' de sulfate d'argent (50-100 µm d'épaisseur) et la couche 4 d'argent (20-50 µm d'épaisseur) sont déposées successivement dans l'autre cavité (à gauche). La couche 4 recouvre la couche 4', le plot 26 et la portion du substrat située entre les deux. Enfin, une seconde couche 6b de microfibres de verre et la membrane 16 (300 µm d'épaisseur) sont déposées à l'extrémité opposée au plot 26, de préférence jusqu'au niveau de la couche 4.

La polymérisation de la membrane s'effectue comme décrit précédemment, de même que le remplissage des couches 6a et 6b en microfibres par l'électrolyte liquide.

La figure 6 montre que la couche de microfibres de verre est, de préférence, divisée en deux parties 6c et 6d séparées par la membrane 16. La partie 6c, à l'extrémité de l'électrode, protège la membrane 16 d'un contact direct avec les autres électrodes de la cellule. De plus, comme cela est visible à la figure 6, les couches 4 et 4' peuvent être disposées sous forme de bandes espacées latéralement dans la partie 6d d'environ 50 µm. De cette manière, l'étape de remplissage de la partie 6d par l'électrolyte interne est facilitée.

A la figure 7, après avoir inséré l'électrolyte dans la couche 6, les deux demi-électrodes sont solidarisées par leurs couches 4 de manière étanche, par exemple par collage. Un collecteur de courant et une enveloppe protectrice sont fixés sur l'électrode, comme décrit en relation avec la figure 4. La partie non protégée de l'électrode correspond à la partie 6c de la couche d'électrolyte, qui est en contact avec l'électrolyte de la cellule.

Le procédé de réalisation de l'électrode de référence décrit ci-dessus peut comprendre des étapes communes avec d'autres procédés de réalisation d'électrodes. On peut par exemple réaliser, à grande échelle, une électrode de référence, une électrode de travail et une contre électrode simultanément sur un même substrat. Un dispositif électrochimique complet, par exemple un détecteur chimique, peut ainsi être réalisé par ces techniques simples et peu coûteuses.

De nombreuses variantes et modifications de l'électrode de référence décrite ici apparaîtront à l'homme du métier. Notamment, la réalisation a été décrite en relation avec le couple argent/sulfate d'argent et l'électrolyte H₂SO₄. Cependant, l'invention n'est pas limitée à un type particulier d'électrodes. On pourra également envisager d'utiliser les couples Ag/AgCl, Ag/AgBr, Ag/Agl et les électrolytes HCl, HBr, Hl... De même, d'autres matériaux poreux (solides), servant de contenant à l'électrolyte interne (liquide), peuvent être utilisés, notamment le verre sous forme de microbilles rendues poreuses par attaque chimique et jouant le rôle de réservoir.

## Revendications

1. Électrode de référence comprenant :
- un électrolyte de référence (6), et
- une membrane (16) échangeuse de protons agencée pour séparer l'électrolyte de référence d'un milieu (20) externe à l'électrode,
**caractérisée en ce que** la membrane échangeuse de protons comprend des particules de polyaniline dopée à l'acide distribuées dans un matériau polymère liant.

2. Électrode de référence selon la revendication 1, **caractérisée en ce que** le rapport de la masse de polyaniline sur la masse de matériau polymère liant est compris entre 1 et 2.

3. Électrode de référence selon la revendication 1, **caractérisée en ce que** la polyaniline est dopée avec un ion identique à l'un des ions de l'électrolyte de référence (6).

4. Procédé de réalisation d'une électrode de référence comprenant les étapes suivantes :
- réaliser un mélange d'une poudre à base de polyaniline dopée à l'acide et d'un matériau liquide polymérisable,
- déposer une couche du mélange sur une couche d'électrolyte de référence (6), et
- polymériser le mélange.

5. Procédé selon la revendication 4, **caractérisé en ce qu'**il comprend, avant la réalisation du mélange, les étapes suivantes :
- synthétiser la polyaniline dopée à l'acide par voie électrochimique,
- broyer la polyaniline dopée à l'acide pour former une poudre.

6. Procédé selon la revendication 5, **caractérisé en ce que** la synthèse électrochimique de la polyaniline dopée à l'acide est réalisée à l'aide d'un précurseur contenant un ion identique à l'un des ions de l'électrolyte de référence (6).

7. Procédé selon la revendication 5, **caractérisé en ce que** la synthèse électrochimique de la polyaniline dopée à l'acide est réalisée à l'aide d'un électrolyte identique à l'électrolyte de référence (6).

8. Procédé selon la revendication 4, **caractérisé en ce que** le matériau polymérisable est un pré-polymère à base de phénol-furfural, de phénol-formaldéhyde, de méthacrylate de méthyle ou de résine époxy durcie à l'aide d'un acide.

## Patentansprüche

1. Referenzelektrode, umfassend:
- einen Referenzelektrolyten (6) und
- eine Protonenaustauschmembran (16), die dazu eingerichtet ist, den Referenzelektrolyten von einem Medium (20) außerhalb der Elektrode zu treinnen,
**dadurch gekennzeichnet, dass** die Protonenaustauschmembran Partikel aus mit Säure dotiertem Polyanilin, die in einem polymeren Bindematerial verteilt sind, umfasst.

2. Referenzelektrode nach Anspruch 1, **dadurch gekennzeichnet, dass** das Verhältnis der Masse von Polyanilin zu der Masse von polymerem Bindematerial zwischen 1 und 2 beträgt.

3. Referenzelektrode nach Anspruch 1, **dadurch gekennzeichnet, dass** das Polyanilin mit einem Ion dotiert ist, das mit einem der Ionen des Referenzelektrolyten (6) identisch ist.

4. Verfahren zur Herstellung einer Referenzelektrode, das die folgenden Schritte umfasst:
- Herstellen eines Gemischs aus einem Pulver auf der Basis von mit Säure dotiertem Polyanilin und aus einem flüssigen, polymerisierbaren Material,
- Abscheiden einer Schicht des Gemischs auf einer Schicht aus Referenzelektrolyt (6), und
- Polymerisieren des Gemischs.

5. Verfahren nach Anspruch 4, **dadurch gekennzeichnet, dass** es vor dem Herstellen des Gemischs die folgenden Schritte umfasst:
- Synthetisieren des mit Säure dotierten Polyanilins auf elektrochemischem Weg,
- Mahlen des mit Säure dotierten Polyanilins, um ein Pulver zu bilden.

6. Verfahren nach Anspruch 5, **dadurch gekennzeichnet, dass** die elektrochemische Synthese des mit Säure dotierten Polyanilins mit Hilfe eines Precursors, der ein Ion enthält, welches mit einem der Ionen des Referenzelektrolyten (6) identisch ist, vollzogen wird.

7. Verfahren nach Anspruch 5, **dadurch gekennzeichnet, dass** die elektrochemische Synthese des mit Säure dotierten Polyanilins mit Hilfe eines Elektrolyten, der mit dem Referenzelektrolyten (6) identisch ist, vollzogen wird.

8. Verfahren nach Anspruch 4, **dadurch gekennzeichnet, dass** das polymerisierbare Material ein Vorpolymer auf der Basis von Phenol-Furfural, von Phenol-Formaldehyd, von Methylmethacrylat oder von mit Hilfe einer Säure gehärtetem Epoxidharz ist.

## Claims

1. Reference electrode comprising:
- a reference electrolyte (6), and
- a proton exchange membrane (16) arranged to separate the reference electrolyte from a medium (20) external to the electrode,
**characterized in that** the proton exchange membrane comprises acid-doped polyaniline particles distributed in a bonding polymer material.

2. Reference electrode according to claim 1, **characterized in that** the ratio of the polyaniline mass to the mass of bonding polymer material is comprised between 1 and 2.

3. Reference electrode according to claim 1, **characterized in that** the polyaniline is doped with an ion identical to one of the ions of the reference electrolyte (6).

4. Method for forming a reference electrode comprising the steps of:
- forming a mixture of an acid-doped polyaniline based powder and of a liquid polymerizable material,
- depositing a layer of the mixture on a reference electrolyte layer (6), and
- polymerizing the mixture.

5. Method according to claim 4, **characterized in that** it comprises, before forming the mixture, the steps of:
- electrochemically synthesizing acid-doped polyaniline,
- grinding the acid-doped polyaniline to form a powder.

6. Method according to claim 5, **characterized in that** the electrochemical synthesis of acid-doped polyaniline is performed by means of a precursor containing an ion identical to one of the ions of the reference electrolyte (6).

7. Method according to claim 5, **characterized in that** the electrochemical synthesis of acid-doped polyaniline is performed by means of an electrolyte identical to the reference electrolyte (6).

8. Method according to claim 4, **characterized in that** the polymerizable material is a phenol-furfural, a phenol-formaldehyde, a methyl methacrylate, or an acid-hardened epoxy resin based pre-polymer.
